# EUROPÄISCHE PATENTSCHRIFT

(11) **EP 1 882 802 B1**
(45) Veröffentlichungstag und Bekanntmachung des Hinweises auf die Patenterteilung: **10.08.2016**
(21) Anmeldenummer: 07111601.6
(22) Anmeldetag: 03.07.2007
(51) Int. Cl.: E05F 15/00, E05F 15/40, E06B 9/84, G05B 19/416, E05D 13/00

(54) **Verfahren zum gesicherten Bremsen eines Tores sowie Vorrichtung zur Durchführung des Verfahrens**
Method for safe braking of a gate and device for implementing the method
Procédé destiné au ralentissement sécurisé d'un portail tout comme dispositif destiné à la réalisation du procédé

(30) Priorität: 28.07.2006 DE 102006034962
(43) Veröffentlichungstag der Anmeldung: 30.01.2008
(73) Patentinhaber: Feig Electronic GmbH, 35781 Weilburg-Waldhausen (DE)
(72) Erfinder: Schäfer, Dirk, 35789, Weilmünster (DE)
(74) Vertreter: Knefel, Cordula

(56) Entgegenhaltungen:
- EP-A- 0 429 835
- EP-A- 0 841 743
- DE-A1- 10 142 431
- DE-C1- 4 207 705
- DE-U1- 29 513 962
- FR-A- 2 868 112
- US-B1- 6 445 152
- US-B2- 6 737 823

## Beschreibung

Die Erfindung betrifft ein Verfahren zum gesicherten Bremsen eines Tores.

Die Erfindung bezieht sich auf ein Verfahren zum gesicherten Bremsen eines Tores im Fehlerfall, das heißt im Falle eines Ausfalles einer mechanischen Komponente mit Hilfe der elektromotorischen Antriebseinheit des Tores.

Bei heute üblichen elektromotorisch angetriebenen Toren wie beispielsweise Rolltoren, Deckenlauftoren, Sektionaltoren oder Schwingtoren ist die Mechanik des Tores häufig so ausgelegt, dass der elektromotorische Antrieb des Tores nicht die volle Last des Tores antreiben muss. Hierzu sind die Tore abhängig von ihrer Konstruktion und Bauart mit unterschiedlichen Vorrichtungen wie beispielsweise Federelementen, Seilzügen und Kontergewichten ausgestattet, die dafür sorgen, dass nur ein Teil der zur Bewegung notwendigen Energie über den elektromotorischen Antrieb zugeführt werden muss, und die unter dem Oberbegriff der Balancevorrichtungen zusammengefasst werden können.

Sobald eine derartige Balancevorrichtung ausfällt, weil beispielsweise eine Feder bricht oder ein mit dem Kontergewicht verbundenes Seil reißt, kann es zu einer ungewollten, unkontrollierten und gefährlichen Abwärtsbewegung, dem so genannten Absturz eines Tores kommen.

Bei anderen zum Stand der Technik zählenden Toren sind die Konstruktion und der Antrieb so ausgelegt, dass auf eine Balancevorrichtung verzichtet wird. Bei diesen Toren stellt häufig eine zusätzliche elektromagnetische Bremsvorrichtung sicher, dass das Tor nach dem Abschalten des Antriebs in der Ruheposition gehalten wird. Bei einer Funktionsstörung der Bremsvorrichtung durch beispielsweise verschlissene Bremsbeläge kann es auch bei diesen Toren zum Absturz des Tores kommen.

Auch Kombinationen aus Balancevorrichtung und elektromechanischer Bremsvorrichtungen sind bekannt. Dabei hat die elektromechanische Bremsvorrichtung beispielsweise die Aufgabe, ein sich in Bewegung befindliches Tor schnell zum Stillstand zu bringen, falls beispielsweise ein Haltepunkt erreicht wird, und das Tor in dieser Position so lange sicher zu halten, bis ein erneuter Fahrbefehl ausgeführt werden soll.

Bei einem Defekt der Bremsvorrichtung kann ein Tor unter Umständen die gewünschte Halteposition nicht erreichen oder die Halteposition wird nicht wie gewünscht gehalten, sondern das Tor beginnt langsam und ungewollt die Position zu verlassen.

Zur Verhinderung eines Absturzes des Tores sind nach dem Stand der Technik diverse mechanische Lösungen bekannt wie sie beispielsweise in DE 37 01 251 C2, DE 38 14 275 C2, DE 41 38 711 C2 oder DE 198 55 697 C2 beschrieben sind und bei denen beispielsweise mittels vorgespannter Federn oder aufgrund von fliehkraftbetätigten mechanischen Vorrichtungen zusätzliche Bremsvorrichtungen ausgelöst oder betätigt werden, die das Tor beispielsweise in den seitlichen Laufschienen des Tores mehr oder weniger abbremsen oder die mechanisch auf die Torwelle einwirken, um die unkontrollierte Bewegung des Tores zu stoppen.

Alle zum Stand der Technik gehörenden technischen Lösungen zur Verhinderung eines Torabsturzes oder zur Notbremsung haben den Nachteil, dass zusätzliche mechanische Vorrichtungen notwendig sind, deren Funktionsfähigkeit zudem in den meisten Fällen während eines normalen Lebenszyklus eines Tores nur schwer geprüft werden kann, und bei denen im Falle einer gewollten oder ungewollten Auslösung nur schwer erkennbar ist, was zum Auslösen der Vorrichtung geführt hat. Bei einigen zum Stand der Technik gehörenden Vorrichtungen ist zudem nicht erkennbar, dass sie sich im ausgelösten Zustand befinden, womit dem Benutzer der Toranlage die vermeintliche Fehlerursache erst nach aufwändiger. Suche erkennbar wird.

Die heute üblichen elektromotorischen Antriebe für Tore, die so genannten Torantriebe, bestehen in der Regel aus einem Elektromotor, der zumeist als preiswerter asynchroner Drehstrommotor ausgeführt ist, und der in den meisten Fällen mit einem direkt angeflanschten Getriebe verbunden ist, wobei das Getriebe häufig als so genanntes Schneckengetriebe ausgeführt ist.

Gemäß dem Stand der Technik ist es ebenfalls bekannt, Torantriebe über einen Frequenzumrichter zu speisen, damit das Tor mit unterschiedlicher Geschwindigkeit verfahren werden kann, und um die Möglichkeit zum sanften Anlaufen und Stoppen des Tores zu erhalten.

Der Frequenzumrichter ist hierbei gemäß dem Stand der Technik Bestandteil einer komplexen Torsteuerung, die neben dem Frequenzumrichter auch mindestens eine Vorrichtung besitzt, mit der die Position des Tores kontinuierlich ermittelt werden kann. In der DE 295 13 962 U1 und DE 101 42 431 B4 werden solche Torsteuerungen mit integriertem Frequenzumrichter und angeschlossenem Positionsgeber beschrieben.

Gemäß dem Stand der Technik (DE 196 45 811 C2) ist eine Steuerungsanordnung zur Notabschaltung bekannt. Diese zum Stand der Technik gehörende Steuerungsanordnung weist ein Hebezeug auf. Beim Hubvorgang soll eine Überlastung des Hubwerkes beim Anheben einer Last im Fehlerfalle, beispielsweise beim Verhaken der Last, vermieden werden. Hierzu wird eine Grenzwertüberschreitung beim Hubvorgang erfasst. Diese zum Stand der Technik gehörende Vorrichtung weist den Nachteil auf, dass eine zusätzliche Erfassungsvorrichtung für die mechanische Überlastung vorgesehen sein muss, beispielsweise ist ein Seilkraftsensor in Form einer Kraftmessdose vorgesehen.

Zum Stand der Technik (US 6,445,152 B1) gehört eine Steuereinrichtung für ein Tor, bei der ein "motion control processor" Signale eines "position encoder" verarbeitet und mit Sollwerten für ein vorgegebenes Bewegungsprofil vergleicht. Weicht die ermittelte Bewegung von dem Bewegungsprofil Sollwert ab, wird der Antrieb entweder so angesteuert, dass er beschleunigt wird oder der Antrieb wird gebremst. Der Regelungsprozess gemäß diesem Stand der Technik arbeitet jeweils nur, solange ein Befehl zum Fahren des Tores anliegt, nämlich bis zur Stelle "end of stroke". Dieses zum Stand der Technik gehörende Verfahren weist den Nachteil auf, dass nicht überwacht werden kann, ob beispielsweise eine elektromechanische Bremsvorrichtung einen Defekt aufweist und das Tor sich nicht in einer vorgegebenen Stillstandsposition befindet.

Zum Stand der Technik (DE 42 07 705 C2) gehört eine Karusselltür, welche durch eine Datenverarbeitungseinheit geregelt beziehungsweise gesteuert wird und deren sämtliche Funktionen einschließlich der Steuerung und des Mikroprozessors intern selbst überwacht werden. Bei Abweichungen vom Normalwert stoppt die Karusselltür. Ein reiner Stopp reicht jedoch bei Toren mit vertikal bewegten Torbehängen nicht aus, um das Sicherheitsrisiko zu minimieren.

Weiterhin gehören zum Stand der Technik (EP 0 429 835 A1) ein Verfahren und eine Vorrichtung zur Herabsetzung der Einklemmgefahr bei automatischen Türen. Gemäß diesem Verfahren soll die Einklemmgefahr bei automatischen Türen, insbesondere bei Aufzügen mit geregeltem Türantrieb, herabgesetzt werden. Das zum Stand der Technik gehörende Verfahren sieht hierfür vor, dass die Tür im Falle einer Störkraft, die auf die schließende Tür wirkt, bis zum Stillstand abgebremst wird, und es wird eine Reversierung, also eine Öffnungsbewegung eingeleitet.

Dieses Verfahren weist den Nachteil auf, dass bei Toren mit sich vertikal bewegenden Torbehängen nicht in jedem Fall eine Reversierung bei Ausfall einer Balance- oder Bremsvorrichtung möglich ist.

Das der Erfindung zugrunde liegende technische Problem besteht darin, ein Verfahren anzugeben, mit dem der Absturz eines Tores verhindert werden kann, ohne dass hierzu zusätzliche Vorrichtungen am Tor oder am Torantrieb notwendig sind, die sich also mit den nach dem Stand der Technik bereits vorhandenen Vorrichtungen Torantrieb, Torsteuerung, Frequenzumrichter und Positionsgeber realisieren lassen, und welches zumindest vorübergehend die Funktion für eine defekte elektromechanische Bremsvorrichtung des Tores übernehmen kann, und welches zuverlässig die Signalisierung einer defekten Balance- und/oder Bremsvorrichtung ermöglicht.

Dieses technische Problem wird durch ein Verfahren mit den Merkmalen gemäß Anspruch 1 gelöst.

Das erfindungsgemäße Verfahren zum sicheren Bremsen eines elektromotorisch angetriebenen Tores in einem Fehlerfall bei einem Absturz des Tores, bei dem wenigstens ein Sollwert "Drehrichtung" und/oder "Fahrgeschwindigkeit" und/oder "Torposition" ermittelt und mit einem Istwert verglichen wird, bei dem die Istwerte "Drehrichtung", "Fahrgeschwindigkeit" und/oder "Torposition" von wenigstens einem Positionsgeber ermittelt werden, bei dem bei einer außerhalb eines vorgegebenen Bereiches liegenden Abweichung des Istwertes von dem Sollwert ein motorischer Bremsvorgang oder ein motorischer Stoppvorgang eingeleitet wird, zeichnet sich dadurch aus, dass der Vergleich zwischen Soll- und Istwert permanent durchgeführt wird und dass nach einem Brems- oder Stoppvorgang das Tor in eine sichere Halteposition gefahren wird, und dass überwacht wird, dass eine elektromechanische Bremsvorrichtung einen Defekt hat und das Tor sich nicht in der vorgegebenen Stillstandsposition befindet, oder dass eine defekte Balancevorrichtung erkannt wird, die das Tor im Stillstand in der jeweiligen Ruheposition halten soll.

Der besondere Vorteil der Erfindung liegt darin, dass die Istwerte "Drehrichtung", "Fahrgeschwindigkeit" und/oder "Torposition" aufgrund der Daten von wenigstens einem Positionsgeber ermittelt werden. Dies hat den Vorteil, dass der oder die ohnehin vorhandenen Positionsgeber die Istwerte an die Steuervorrichtung übermitteln und somit die Istwerte zum Vergleich mit den Sollwerten zur Verfügung stehen.

Darüber hinaus weist die Erfindung den Vorteil auf, dass der Vergleich zwischen Soll- und Istwert permanent durchgeführt wird. Das bedeutet, dass der Vergleich während des Verfahrens des Torbehanges durchgeführt wird. Darüber hinaus soll jedoch auch bei Stillstand des Tores der wenigstens eine Istwert ermittelt und mit dem Sollwert überwacht werden. In diesem Falle kann überwacht werden, dass beispielsweise eine elektromechanische Bremsvorrichtung einen Defekt hat und das Tor sich nicht in der vorgegebenen Stillstandsposition befindet. Es kann aber auch eine defekte Balancevorrichtung erkannt werden, die das Tor im Stillstand in der jeweiligen Ruheposition halten soll.

Ein weiterer Vorteil der Erfindung liegt darin, dass im Fehlerfall ein Bremsvorgang oder ein Stoppvorgang, der überwiegend oder besonders bevorzugt ausschließlich über den Motor durchgeführt wird, eingeleitet wird.

Das bedeutet, dass gemäß dem erfindungsgemäßen Verfahren die genannten Sollwerte einzeln oder in Kombination erfasst werden. Diese Werte werden mit den jeweiligen Istwerten verglichen. Weichen ein oder mehrere Istwerte von den Sollwerten ab, und zwar derart, dass die Abweichungen außerhalb eines vorgegebenen Bereiches liegen, wird ein motorischer Bremsvorgang oder ein motorischer Stoppvorgang eingeleitet.

Beispielsweise kann über die Geschwindigkeit des Torbehanges festgestellt werden, dass beispielsweise das Seil des Kontergewichtes gerissen ist. Der Torbehang fährt in diesem Falle mit einer wesentlich größeren Geschwindigkeit als dies bei einem normalen Öffnungs- oder Schließvorgang der Fall wäre. In diesem Fall weicht der Istwert "Geschwindigkeit" von dem Sollwert ab, und es wird ein motorischer Bremsvorgang oder ein motorischer Stoppvorgang eingeleitet.

Grundsätzlich ist das Verfahren somit so ausgelegt, dass durch die ständige Überwachung der Istwerte ein jederzeitiges Abbremsen in einem Fehlerfall möglich ist.

Die Steuervorrichtung, die den Vergleich zwischen den Ist- und den Sollwerten durchführt, ist die Steuervorrichtung, die ohnehin in der Torsteuerung vorhanden ist. Die Steuervorrichtung übernimmt also die verschiedensten Aufgaben. Die Steuervorrichtung verarbeitet die Eingangssignale. Das heißt, dass sie beispielsweise Auf- und Zubefehle der Torsteuerung verarbeitet. Die Steuervorrichtung gibt Ausgangssignale, beispielsweise gibt sie Warnsignale. Die Steuervorrichtung gibt die Frequenzvorgabe für den Frequenzumrichter. Die Steuervorrichtung verarbeitet gemäß der Erfindung die Signale von dem wenigstens einen Positionsgeber. Die Steuervorrichtung kann darüber hinaus den Motorstrom und/oder die Motorleistung bestimmen. Hierzu weist sie vorteilhaft Messvorrichtungen auf.

Gemäß einer weiteren vorteilhaften Ausführungsform der Erfindung wird bei dem Brems- oder Stoppvorgang einem Frequenzumrichter eine Frequenzvorgabe von 0 Hertz (Hz) vorgegeben. Mit dieser Gleichspannung wird ein asynchroner Drehstrommotor gespeist, so dass der Stoppvorgang durch eine elektromotorische Bremsung eingeleitet wird. Es ist auch möglich, die Frequenzvorgabe in einen Bereich von bis zu 20 Hertz (Hz) zu legen, um den asynchronen Drehstrommotor in langsamer Fahrt zu bewegen und die Torbewegung so weit zu verlangsamen, dass eine Gefährdung durch das sich bewegende Tor minimiert wird.

Eine weitere vorteilhafte Ausführungsform der Erfindung sieht vor, dass bei einem Brems- oder Stoppvorgang parallel zur elektromotorischen Bremsung auch eine elektromechanische Bremsvorrichtung angesteuert wird, falls diese konstruktionsbedingt ohnehin vorhanden ist. Dies hat den Vorteil, dass der Torantrieb und der Frequenzumrichter nicht die volle Bremsleistung erbringen müssen und somit für eine geringere Leistung ausgelegt sein können. Zudem wird hierdurch die Sicherheit des Verfahrens erhöht.

Gemäß der Erfindung ist vorgesehen, dass nach einem Brems- oder Stoppvorgang das Tor in eine sichere Halteposition gefahren wird. Hierdurch wird die Sicherheit des gesamten Verfahrens erhöht.

Vorteilhaft erfolgt das Verfahren des Tores durch eine Frequenzvorgabe der Steuervorrichtung an den Frequenzumrichter. Hierdurch wird erreicht, dass keine zusätzliche Vorrichtung benötigt wird, um den Bremsvorgang einzuleiten.

Gemäß einer weiteren vorteilhaften Ausführungsform der Erfindung führt die Steuervorrichtung während und/oder nach dem Einleiten des Brems- oder Stoppvorganges eine Signalisierung durch. Die Signalisierung kann zum Beispiel aus einem akustischen und/oder optischen Warnsignal bestehen.

Eine Vorrichtung zur Durchführung des erfindungsgemäßen Verfahrens kann dadurch ausgezeichnet sein, dass die Vorrichtung eine Steuervorrichtung aufweist, die als eine einen Vergleich von Soll- und Istwert durchführende Steuervorrichtung ausgebildet ist, und die als eine eine Frequenzvorgabe an einen Frequenzumrichter gebende Steuervorrichtung ausgebildet ist.

Die Steuervorrichtung vergleicht die Ist- und Sollwerte. Weichen die Istwerte von den Sollwerten ab und liegt die Abweichung außerhalb eines vorgegebenen Bereiches, so gibt die Steuervorrichtung an einen Frequenzumrichter eine Frequenzvorgabe von beispielsweise 0 Hertz (Hz), so dass ein Stoppvorgang eingeleitet wird.

Vorteilhaft weist die Vorrichtung zusätzlich ein Anzeigemodul zum Anzeigen eines Fehlerfalles auf, damit ein Fehlerfall wahrgenommen werden kann.

Gemäß einer möglichen Ausführungsform ist das Anzeigemodul in der Steuervorrichtung integriert.

Vorteilhaft ist zusätzlich wenigstens eine elektromechanische Bremsvorrichtung vorgesehen. Diese hält das Tor vorteilhaft in einer Endlage und soll vorteilhaft gemäß dem Ruhestromprinzip unterstützend zum Motor die Bremswirkung ausüben.

Dabei erfüllt die vorliegende Erfindung auch die geltenden Vorschriften und technischen Regeln, nach denen von einer Toranlage bei Auftreten eines Einfachfehlers keine Gefahr ausgehen darf.

Erreicht wird dieses Ziel durch eine Verknüpfung der nach dem Stand der Technik zu einer Torsteuerung gehörenden Komponenten Torantrieb, Torsteuerung mit Frequenzumrichter und Positionsgeber zur kontinuierlichen Positionserfassung, wobei der Frequenzumrichter nicht zwingend ein in die Torsteuerung integrierter Bestandteil sein muss, sondern auch als mehr oder weniger separate Einheit ausgeführt sein kann, die jedoch von der Torsteuerung angesteuert werden kann.

Die vorliegende Erfindung macht sich dabei die Tatsache zu Nutze, dass bei entsprechender Auslegung über einen Frequenzumrichter auch eine Wechselspannung mit einer Frequenz von 0 Hertz (Hz), also eine Gleichspannung ausgegeben werden kann. Die Speisung eines asynchronen Drehstrommotors mit einer Gleichspannung hat zur Folge, dass dieser mit einer sehr geringen Geschwindigkeit im Quasi-Stillstand verharrt, was dazu führt, dass das angekoppelte Tor nahezu in seiner augenblicklichen Stellung gehalten werden kann.

Bei dem erfindungsgemäßen Verfahren, welches als Software oder Firmware in die logischen Abläufe der Steuervorrichtung der Torsteuerung integriert wird, erfolgt eine kontinuierliche Kontrolle bezüglich der augenblicklichen Position des Tores und/oder ob ein Fahrbefehl zum Bewegen des Tores ausgeführt werden soll und mit welcher Geschwindigkeit und in welche Richtung sich das Tor bewegen soll.

Stellt die Steuervorrichtung eine zuvor definierte Abweichung zwischen der Sollgeschwindigkeit oder Sollbewegungsrichtung des Tores und der tatsächlichen über den Positionsgeber ermittelten Bewegungsrichtung und Geschwindigkeit des Tores fest, wobei die Begriffe Soll-Bewegungsrichtung und Soll-Geschwindigkeit auch den Stillstand einbeziehen, löst die Steuervorrichtung die Zwangsbremsung des Tores aus, indem sie dem Frequenzumrichter eine Frequenzvorgabe von 0 Hertz bis 20 Hertz (Hz) übermittelt, um die Torbewegung zu stoppen oder zumindest drastisch zu reduzieren.

Ob die Torbewegung dabei dauerhaft oder lediglich vorübergehend gestoppt oder drastisch reduziert werden kann, ist hierbei unabhängig vom erfindungsgemäßen Verfahren, sondern abhängig von der elektrischen und mechanischen Leistungsfähigkeit des Torantriebes und des Frequenzumrichters und der gegebenenfalls vorhandenen elektromechanischen Bremsvorrichtung.

In einer weiteren vorteilhaften Ausführungsform kann die Steuervorrichtung nach dem Feststellen einer oben beschriebenen Bedingung auch eine Frequenzvorgabe an den Frequenzumrichter übermitteln, mit dem das Tor in langsamer Fahrt eine sichere Halteposition wie beispielsweise die Zu-Position anfahren kann. Bei diesem Vorgehen ist dann gewährleistet, dass keine weitere Gefahr von der vermeintlich defekten Toranlage, die aus Tor, Torantrieb und Torsteuerung besteht, mehr ausgehen kann.

In einer weiteren vorteilhaften Ausführungsform veranlasst die Steuervorrichtung die Signalisierung des erkannten Fehlerfalles, so dass außenstehende Personen auf den Fehlerfall aufmerksam gemacht werden und eine rasche Fehlersuche und Fehlerbeseitigung veranlasst werden kann.

Weitere Merkmale und Vorteile der Erfindung ergeben sich anhand der zugehörigen Zeichnung, in der mehrere Ausführungsbeispiele einer erfindungsgemäßen Torsteuerung zum gesicherten Abbremsen eines Tores nur beispielhaft dargestellt sind. In der Zeichnung zeigen:
- Fig. 1: schematisch eine Toranlage mit einem Rolltor und einer elektromechanischen Bremse;
- Fig. 2: schematisch eine Toranlage mit einer Balancevorrichtung.

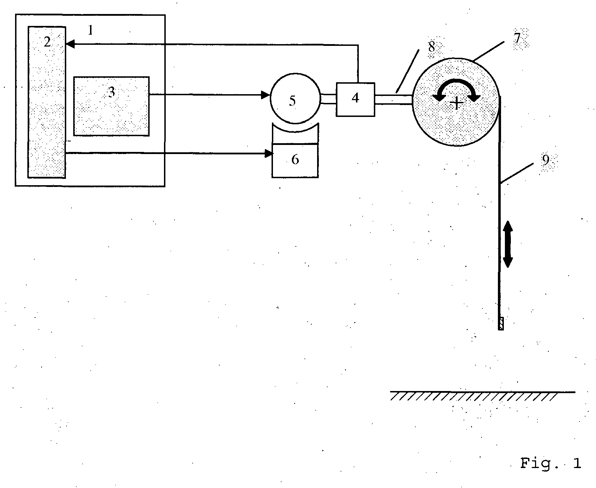

In Fig. 1 ist eine Torsteuerung 1 dargestellt, die einen Frequenzumrichter 3 und eine Steuervorrichtung 2 enthält. Im Normalbetrieb erhält der Frequenzumrichter 3 von der Steuervorrichtung 2 eine Vorgabe für die abzugebende Frequenz und Drehrichtung, mit der ein elektromotorischer Antrieb 5 zu speisen ist, der über eine Antriebswelle 8 mit einer Torwelle 7 mechanisch verbunden ist und auf diesem Weg einen Torbehang 9 in Bewegung versetzen kann.

Über einen Positionsgeber 4, der zwischen dem elektromotorischen Antrieb 5 und der Torwelle 7 oder auf oder an der Torwelle 7 angeordnet sein kann oder in den elektromotorischen Antrieb 5 integriert sein kann oder an einer anderen Stelle angeordnet sein kann, und der als Absolutwertgeber oder Inkrementalgeber ausgeführt sein kann, kann sich die Steuervorrichtung 2 ständig über die tatsächliche Position und Geschwindigkeit des Torantriebes 5 und des damit mechanisch gekoppelten Torbehangs 9 informieren.

Die erfindungsgemäße Steuervorrichtung 2 ist Bestandteil der Torsteuerung 1 und nur schematisch dargestellt, da sie als Softwaremodul in die logischen Abläufe eingebunden wird. Die Steuervorrichtung 2 ist ohnehin in der Torsteuerung 1 enthalten und übernimmt gemäß der Erfindung lediglich zusätzliche Aufgaben.

Die erfindungsgemäße Steuervorrichtung 2 verarbeitet die intern vorliegenden aktuellen Sollwerte "Drehrichtung" und "Fahrgeschwindigkeit" und vergleicht diese mit den Istwerten der vom Positionsgeber 4 gelieferten Angaben, aus denen neben der augenblicklichen Torposition auch die Drehrichtung und die Momentangeschwindigkeit des Torantriebes ermittelt werden kann.

Stellt die Steuervorrichtung 2 beim Vergleich der Sollwerte mit den Istwerten eine Abweichung fest, die außerhalb eines zuvor definierten Bereiches liegt, steuert die Steuervorrichtung 2 den Frequenzumrichter 3 an und gibt dem Frequenzumrichter 3 eine Frequenzvorgabe von 0 Hertz (Hz), um die Geschwindigkeit des elektromotorischen Antriebes 5 drastisch zu reduzieren oder zum Stillstand zu bringen. Gleichzeitig steuert die erfindungsgemäße Steuervorrichtung 2 eine Bremsvorrichtung 6 an, damit diese den Bremsvorgang unterstützt. Diese Bremsvorrichtung 6 ist als elektromechanische Bremsvorrichtung ausgebildet.

Bei der in Fig. 1 dargestellten Ausführungsform der Toranlage kann das erfindungsgemäße Verfahren auch dazu eingesetzt werden, die Funktion des Antriebes 5 zu überwachen. Für den Fall, dass der Antrieb 5 beispielsweise aufgrund von mechanischem Verschleiß den Torbehang 9 nicht in der geforderten Art bewegen oder halten kann, kann über die erfindungsgemäße Steuervorrichtung 2 jederzeit die Bremsvorrichtung 6 angesteuert werden, um den Torbehang 9 abzubremsen.

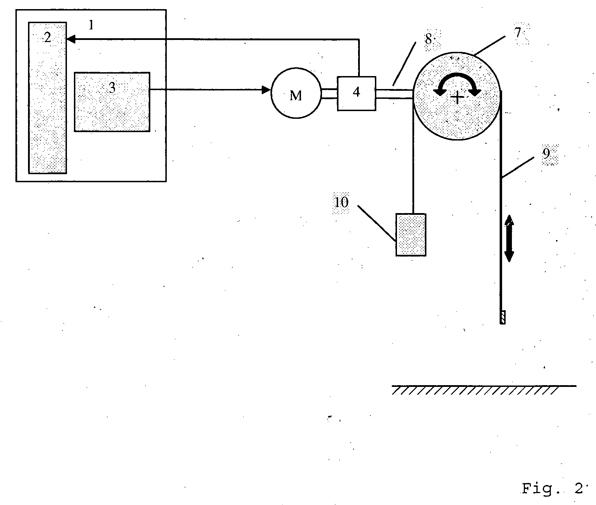

Bei der in Fig. 2 dargestellten Toranlage handelt es sich um eine ausbalancierte Toranlage, bei der eine Balancevorrichtung 10 als Kontergewicht, welches an einem Seil aufgehängt ist, ausgeführt ist, dessen Masse in etwa der Masse des Torbehanges 9 entspricht. Für den Fall, dass die Balancevorrichtung 10 beispielsweise aufgrund eines verschlissenen Seiles ausfällt, würde der Torbehang 9 mehr oder weniger ungebremst herunterfahren.

Stellt die Steuervorrichtung 2 beim Vergleich der Sollwerte mit den Istwerten eine ungewollte Bewegung des Tores fest, die außerhalb eines zuvor definierten Bereiches liegt, gibt die Steuervorrichtung 2 dem Frequenzumrichter 3 eine Frequenzvorgabe von 0 Hertz (Hz), um die Geschwindigkeit des elektromotorischen Antriebes 5 drastisch zu reduzieren oder zum Stillstand zu bringen.

Der elektromotorische Antrieb ist in der Regel nicht so dimensioniert, dass er die volle Last einer defekten Tormechanik halten kann. Deshalb ist es in einer vorteilhaften Ausführungsform vorgesehen, dass die Steuervorrichtung 2 nach Feststellen eines Fehlerfalles das Tor in langsamer Fahrt in eine sichere Ruheposition bewegt, die beispielsweise die Zu-Position des Tores sein kann, die abhängig vom Typ des Tores ist, aber auch an einer anderen Position sein kann.

### Bezugszahlen

- 1: Torsteuerung
- 2: Steuervorrichtung
- 3: Frequenzumrichter
- 4: Positionsgeber
- 5: elektromotorischer Antrieb
- 6: Bremsvorrichtung
- 7: Torwelle
- 8: Antriebswelle
- 9: Torbehang
- 10: Balancevorrichtung

## Patentansprüche

1. Verfahren zum gesicherten Bremsen eines elektromotorisch angetriebenen Tores (9) in einem Fehlerfall bei einem Absturz des Tores (9),
- bei dem wenigstens ein Sollwert "Drehrichtung" und/oder "Fahrgeschwindigkeit" und/oder "Torposition" ermittelt und mit einem Istwert verglichen wird,
- bei dem die Istwerte "Drehrichtung", "Fahrgeschwindigkeit" und/oder "Torposition" von wenigstens einem Positionsgeber (4) ermittelt werden,
- bei dem bei einer außerhalb eines vorgegebenen Bereiches liegenden Abweichung des Istwertes von dem Sollwert ein motorischer Bremsvorgang oder ein motorischer Stoppvorgang eingeleitet wird,
**dadurch gekennzeichnet,**
- **dass** der Vergleich zwischen Soll- und Istwert permanent durchgeführt wird, derart, dass der Vergleich während des Verfahrens des Tores (9) und auch bei Stillstand des Tores (9) durchgeführt wird,
- **dass** das Tor (9) nach einem Brems- oder Stoppvorgang in eine sichere Halteposition gefahren wird,
- **dass** überwacht wird, dass eine elektromechanische Bremsvorrichtung (6) einen Defekt hat und das Tor (9) sich nicht in der vorgegebenen Stillstandsposition befindet, oder dass eine defekte Balancevorrichtung (10) erkannt wird, die das Tor (9) im Stillstand in der jeweiligen Ruheposition halten soll.

2. Verfahren nach Anspruch 1, **dadurch gekennzeichnet, dass** bei dem Brems- oder Stoppvorgang einem Frequenzumrichter (3) eine Frequenzvorgabe von 0 Hertz (Hz) vorgegeben wird, derart, dass eine Gleichspannung ausgegeben wird, und dass mit dieser Gleichspannung ein elektromotorischer Antrieb (5), der einen asynchronen Drehstrommotor beinhaltet, gespeist wird.

3. Verfahren nach Anspruch 1, **dadurch gekennzeichnet, dass** bei dem Brems- oder Stoppvorgang einem Frequenzumrichter (3) eine Frequenzvorgabe in einem Bereich von bis zu 20 Hertz vorgegeben wird, um den asynchronen Drehstrommotor in langsamer Fahrt zu bewegen und die Torbewegung zu verlangsamen zur Minimierung einer Gefährdung durch das sich bewegende Tor.

4. Verfahren nach Anspruch 1, **dadurch gekennzeichnet, dass** bei dem Brems- oder Stoppvorgang eine elektromechanische Bremsvorrichtung (6) aktiviert wird.

5. Verfahren nach Anspruch 1, **dadurch gekennzeichnet, dass** das Verfahren des Tores (9) durch eine Frequenzvorgabe einer Steuervorrichtung (2) an den Frequenzumrichter (3) erfolgt.

6. Verfahren nach einem der vorhergehenden Ansprüche, **dadurch gekennzeichnet, dass** die Steuervorrichtung (2) während und/oder nach dem Einleiten des Brems- oder Stoppvorganges eine Signalisierung durchführt.

7. Verfahren nach einem der vorhergehenden Ansprüche, **dadurch gekennzeichnet, dass** die Steuervorrichtung (2) während einer Start- und/oder Stopprampe einen Brems- oder Stoppvorgang einleitet.

## Claims

1. A method for safe braking of an electrically-powered door (9) in the event of a fault when the door (9) drops uncontrolledly,
- in which at least one desired value "direction of rotation" and/or "travelling speed" and/or "door position" is ascertained and compared with an actual value,
- in which the actual values "direction of rotation", "traveling speed" and/or "door position" are ascertained by at least one position sensor (4),
- in which, in the event of a deviation of the actual value from the desired value which lies outside a specified range, a motorised braking operation or a motorised stopping operation is initiated,
**characterised in that**
- the comparison between the desired value and actual value is carried out permanently, such that the comparison is carried out during moving of the door (9) and also when the door (9) is stopped,
- the door (9) after a braking or stopping operation is moved into a safe holding position,
- it is monitored if an electromechanical braking device (6) has a defect and the door (9) is not in the specified stopped position, or if a defective balancing device (10) which is intended to hold the door (9) in the respective rest position when stopped is recognised.

2. A method according to Claim 1, **characterised in that** a frequency input of 0 Hertz (Hz) is specified to a frequency converter (3) in the braking or stopping operation, such that a DC voltage is output, and **in that** an electrically-powered drive means (5) which contains a three-phase motor is fed with this DC voltage.

3. A method according to Claim 1, **characterised in that** a frequency input in a range of up to 20 Hertz is specified to a frequency converter (3) in the braking or stopping operation, in order to move the asynchronous three-phase motor at low speed and to slow the door movement in order to minimise any risk due to the moving door.

4. A method according to Claim 1, **characterised in that** an electromechanical braking device (6) is activated in the braking or stopping operation.

5. A method according to Claim 1, **characterised in that** the door (9) is moved by a frequency input from a control device (2) to the frequency converter (3).

6. A method according to one of the preceding claims, **characterised in that** the control device (2) performs signalling during and/or after the initiation of the braking or stopping operation.

7. A method according to one of the preceding claims, **characterised in that** the control device (2) initiates a braking or stopping operation during a starting and/or stopping ramp.

## Revendications

1. Procédé pour le freinage sécurisé d'un portail (9) entraîné par un moteur électrique, dans le cas d'une défaillance lors d'une chute du portail (9),
- dans lequel au moins une valeur de consigne « sens de rotation » et/ou « vitesse de déplacement » et/ou « position du portail » est déterminée et comparée à une valeur réelle,
- dans lequel les valeurs réelles « sens de rotation », « vitesse de déplacement » et/ou « position du portail » sont déterminées par au moins un capteur de position (4),
- dans lequel, dans le cas d'un écart, se trouvant hors d'une plage prédéterminée, de la valeur réelle par rapport à la valeur de consigne, un processus de fermeture motorisé ou un processus d'arrêt motorisé est démarré,
**caractérisé en ce que**
- la comparaison entre la valeur de consigne et de la valeur réelle est effectuée en permanence de façon à ce que la comparaison est effectuée pendant le déplacement du portail (9) même dans le cas d'une immobilisation du portail (9),
- le portail (9) est déplacé, après un processus de freinage ou d'arrêt, vers une position de maintien sécurisée,
- il est vérifié qu'un dispositif de freinage électromécanique (6) présente un défaut et que le portail (9) ne se trouve pas dans la position d'immobilisation prédéterminée, ou **en ce qu'**un dispositif d'équilibrage défectueux (10) est détecté, qui doit maintenir le portail (9) à l'arrêt dans la position de repos correspondante.

2. Procédé selon la revendication 1, **caractérisé en ce que**, lors du processus de freinage ou d'arrêt, une directive de fréquence de 0 Hertz (Hz) est prédéterminée dans un convertisseur de fréquence (3), de façon à ce qu'une tension continue soit générée et de façon à ce qu'un entraînement par moteur électrique (5), qui contient un moteur à courant triphasé asynchrone, est alimenté avec cette tension continue.

3. Procédé selon la revendication 1, **caractérisé en ce que**, lors du processus de freinage ou d'arrêt, une directive de fréquence jusqu'à 20 Hertz est prédéterminée dans un convertisseur de fréquence (3), afin de déplacer le moteur à courant triphasé asynchrone en vitesse lente et de ralentir le déplacement du portail pour réduire le danger résultant du portail en mouvement.

4. Procédé selon la revendication 1, **caractérisé en ce que**, lors du processus de freinage ou d'arrêt, un dispositif de freinage électromécanique (6) est activé.

5. Procédé selon la revendication 1, **caractérisé en ce que** le déplacement du portail (9) a lieu par l'intermédiaire d'une directive de fréquence d'un dispositif de commande (2) au convertisseur de fréquence (3).

6. Procédé selon l'une des revendications précédentes, **caractérisé en ce que** le dispositif de commande (2) effectue, pendant et/ou après le démarrage du processus de freinage ou d'arrêt, une signalisation.

7. Procédé selon l'une des revendications précédentes, **caractérisé en ce que** le dispositif de commande (2) démarre, pendant une rampe de démarrage et/ou d'arrêt, un processus de freinage ou d'arrêt.
